# EUROPEAN PATENT APPLICATION

(11) **EP 4 446 094 A1**
(43) Date of publication of application: **16.10.2024**
(21) Application number: 22903132.3
(22) Date of filing: 10.11.2022
(51) Int. Cl.: B29C 64/386, B33Y 50/00

(54) **3D PRINTING FILE GENERATION METHOD, APPARATUS, COMPUTER DEVICE, AND STORAGE MEDIUM**

(30) Priority: 07.12.2021 CN 202111483699
(71) Applicant: Shenzhen Creality 3D Technology Co., Ltd., Shenzhen, Guangdong 518110 (CN)
(72) Inventor: AO, Danjun, Shenzhen, Guangdong 518110 (CN); TANG, Jingke, Shenzhen, Guangdong 518110 (CN); LIU, Hong, Shenzhen, Guangdong 518110 (CN)
(74) Representative: Zaboliene, Reda
(86) International application number: PCT/CN2022/131213
(87) International publication number: WO 2023/103709

(57) **Abstract**

The present application provides a method for generating a 3D printing file, a 3D printing device, a computer device, and a storage medium, capable of forming seams with more elegant or more accord with design requirements, effectively improving aesthetic degrees of printed products. The method includes: layering a 3D model into a plurality of sliced layers, and obtaining contour data of each of the sliced layers; determining a straight line X=X0 corresponding to an abscissa X0 of an intersection point of a preset seamline on the current layer of the sliced layers; determining coordinates of a seam point according to the straight line X=X0 corresponding to the abscissa X0 of the intersection point of the preset seamline on the current layer and the contour data of the current layer, updating the coordinates of the seam point into the contour data of the current layer, and setting the seam point as a start printing point of the current layer; and generating the 3D printing file of the 3D model according to updated contour data of each of the sliced layers.

## Description

The present application requires A priority of a Chinese patent application filed with the Chinese Patent Office on December 7, 2021, with application number 202111483699.8 and the application name "3D PRINTING FILE GENERATION METHOD, APPARATUS, COMPUTER DEVICE, AND STORAGE MEDIUM ", the entire contents of the Chinese patent application are incorporated by reference in the present application.

### TECHNICAL FIELD

This application relates to the field of three-dimensional (3D) printing technologies, and specifically, to a method for generating a 3D printing file, the laser, a 3D printing device, a computer device, and a computer storage medium.

### BACKGROUND

3D printing (rapid proto-typing technology) is a cumulative manufacturing technology, also known as additive manufacturing. The 3D printing is a technology that uses bondable materials such as special waxes, powdered metals, or plastics to print 3D objects according to digital model files. Slicing refers to dividing a solid model into a plurality of sliced layers with equal thickness, which is the basis of 3D printing, and slicing sliced layers can be paths of 3D printing.

In the prior art, a model may be formed by a plurality of triangular planes, and when slicing, an outer contour of each layer is formed by a connection line of contour points generated by an intersection of a horizontal plane of the current layer and the triangular plane included by the outer layer. Points on the contour are generated after each layer intersects with all triangle planes of the current layer of the model when layering the model, and seam points are selected from these points, causing some seams of the model are crooked, which greatly affects aesthetics of the print. How to solve the above problems is that the skilled in the art need to consider.

### SUMMARY

Accordingly, this application provides a method for generating a three-dimensional (3D) printing file, a device, a computer device, and a computer storage medium, which is capable of forming seams with more elegant or more accord with design requirements, effectively improve aesthetic degrees of printed products.

First aspect of this application provides the method for generating the 3D printing file, the method includes: layering a 3D model into a plurality of sliced layers, and obtaining contour data of each of the sliced layers; determining a straight line X=X0 corresponding to an abscissa X0 of an intersection point of a preset seamline on the current layer of the sliced layers; determining coordinates of a seam point according to the straight line X=X0 corresponding to the abscissa X0 of the intersection point of the preset seamline on the current layer and the contour data of the current layer, updating the coordinates of the seam point into the contour data of the current layer, and setting the seam point as a start printing point of the current layer; and generating a 3D printing file of the 3D model according to updated contour data of each of the sliced layers.

Exemplarily, the method of determining the straight line X=X0 corresponding to the abscissa X0 of the intersection point of the preset seamline on the current layer of the sliced layers includes: determining a straight line X= m+n*Z corresponding to the abscissa X0 of the intersection point of the preset seamline on the current layer according to an equation of X0=m+n*Z, m and n are constants, and Z is a height of the current layer.

Exemplarily, the method of determining the coordinates of the seam point according to the straight line X=X0 corresponding to the abscissa X0 of the intersection point of the preset seamline on the current layer and the contour data of the current layer includes: determining an abscissa of the seam point as X0=m+n*Z, the abscissa of the intersection point of the preset seamline on the current layer is the same as the abscissa of the seam point corresponding to the current layer, m and n are constants, and Z is the height of the current layer.

Exemplarily, the preset seamline is a vertical seamline, and n=0, the abscissa of the intersection point of the preset seamline on the current layer is determined as X0=m according to the equation of X0=m+n*Z.

Exemplarily, the method of determining the coordinates of the seam point according to the straight line X=X0 corresponding to the abscissa X0 of the intersection point of the preset seamline on the current layer and the contour data of the current layer further includes: calculating distances from each point in the contour data of the current layer to a straight line X=m+n*Z; selecting two auxiliary location points Q1 and Q2 according to distance calculated results and the straight line X=m+n*Z, and establishing a linear equation L=ax+b by simultaneous Q1 and Q2, a and b are constants; calculating an intersection of equations of X=m+n*Z and L=ax+b to obtain an ordinate Y0 of the seam point; and determining the coordinates (X0, Y0) of the seam point according to the abscissa X0 of the seam point and the ordinate Y0 of the seam point.

Exemplarily, the method of selecting the two auxiliary location points Q1 and Q2 according to the distance calculated results and the straight line X=m+n*Z inlcudes: selecting two points closest to the preset seamline as the two auxiliary location points Q1 and Q2 when a plurality of repeating points is existed between the current layer and the straight line X=m+n*Z.

Exemplarily, the method of selecting the two auxiliary location points Q1 and Q2 according to the distance calculated results and the straight line X=m+n*Z inlcudes: selecting two points in the contour data of the current layer that are closest to the preset seamline as the two auxiliary location points Q1 and Q2 when one repeating point is existed between the current layer and the straight line X=m+n*Z.

Second aspect of this application provides a 3D printing device, the 3D printing device includes: a slicing and layering module, configured to layer a 3D model into a plurality of sliced layers, and obtain contour data of each of the sliced layers; a seam point calculating module, configured to determine a straight line corresponding to an abscissa of an intersection point of a preset seamline on the current layer of the sliced layers, determine coordinates of a seam point according to the straight line corresponding to the abscissa of the intersection point of the preset seamline on the current layer and the contour data of the current layer, updating the coordinates of the seam point into the contour data of the current layer, and set the seam point as a start printing point of the current layer; and a printing module, configured to print the 3D model according to updated contour data of each of the sliced layers.

Third aspect of this application provides a computer device, the computer device includes: one or more processors; and a storage medium configured to store one or more programs. When the one or more programs run on the one or more processors, to cause the one or more processors to execute the above-mentioned method for generating the 3D printing file.

Fourth aspect of this application provides a computer storage medium, the computer storage medium stores computer programs, when the computer programs run on a processor, the processor is caused to execute the above-mentioned method for generating the 3D printing file.

Compared with the prior art, the method for generating the 3D printing file of the application supplements layered contour data of the 3D model by intersecting linear equations to determine coordinate information of the corresponding seam point in the sliced layers, and the coordinate information of the seam point is added to the contour data. When slicing of the model is completed and printed, the seam point of each layer is the start printing point and the end printing point of each layer, and the coordinate information of the seam point is supplemented in multiple sliced layers, so that the generated seamline is the same or extremely close to expected seamline on the model after printing of model is completed, and the aesthetic degree can be effectively increased; Especially for vertical seamlines, it is possible to obtain a high aesthetic when applied to printing text, titles, etc.

### BRIEF DESCRIPTION OF DRAWINGS

FIG. 1 is a flowchart of a method for generating a three-dimensional (3D) printing file according to an embodiment of the present application;
FIG. 2 is a schematic diagram of existing one repeating point of the method for generating the 3D printing file according to an embodiment of the present application;
FIG. 3 is a schematic diagram of existing a plurality of repeating points of the method for generating the 3D printing file according to an embodiment of the present application;
FIG. 4 is a schematic structural diagram of a 3D printing device according to an embodiment of the present application;
FIG. 5 is a schematic structural diagram of a computer device according to an embodiment of the present application.

### Reference signs of main elements

| | |
|---|---|
| 3D printing device | 10 |
| slicing and layering module | 11 |
| seam point calculating module | 12 |
| printing module | 14 |
| processor | 41 |
| storage medium | 42 |
| input device | 43 |
| output device | 44 |

The following specific embodiments will describe the present application in more detail in conjunction with abovementioned accompanying drawings.

### DESCRIPTION OF EMBODIMENTS

The present application is described in detail below in conjunction with the drawings and the description of embodiments. It is understood that, the described embodiments herein are only for the interpretation of the present application and are not for the limitation of the present application. Exemplary embodiments are provided in order to make the application thorough and complete, and to adequately communicate the scope of the application to those skilled in the art. Similar drawing marks denote the same or similar components.

The terminology used herein is used only for a purpose of describing exemplary embodiments and is not intended to limit the present application. As used herein, unless the context clearly states otherwise, the singular forms "one", "one" and "the" are intended to include the plural as well. In addition, when used herein, the words "including" and/or "containing" and/or "having", integers, steps, operations, components, and/or groups, but do not exclude existing or addition of one or more other characteristics, regions, integers, steps, operations, components, and/or groups thereof.

Unless otherwise defined, all terms used herein, including technical and scientific terms, have the same meanings as are generally understood by a person skilled in the art to which the application belongs. In addition, unless expressly defined in the context, those terms such as those defined in the Common Dictionary shall be construed to have meanings consistent with their meanings in the relevant technology and in the contents of the present application, and shall not be construed as idealized or overly formal.

The following is a description of the exemplary embodiments in conjunction with the accompanying drawings. It should be noted that the components depicted in the reference drawings are not necessarily shown to scale, and the same or similar components will be given the same or similar reference to the drawings or similar technical terms.

The exemplary embodiments of the present application are described in conjunction with the accompanying drawings.

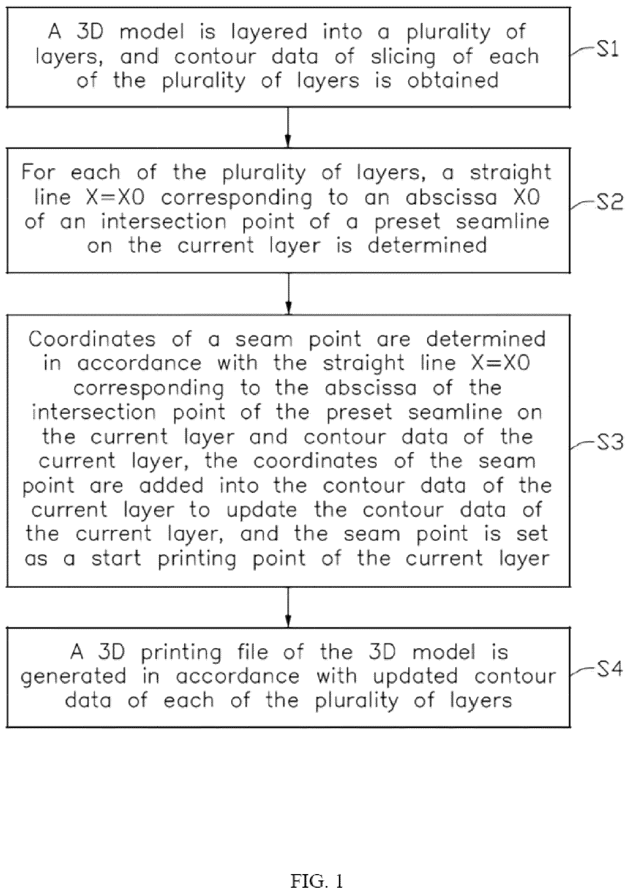

Referring to FIG. 1, FIG. 1 is a flowchart of a method for generating a three-dimensional (3D) printing file according to an embodiment of the present application. The present embodiment is suitable for a printing a 3D model by using a fused deposition modeling technology, and the method may be performed by a 3D printing device provided in an embodiment of the present application. The 3D printing device can be realized by means of hardware and/or software, and can generally be integrated into a computer device, the method of the exemplary embodiment includes the following blocks.

In block S 1, a 3D model is layered into a plurality of sliced layers, and contour data of each of the sliced layers is obtained.

In one embodiment, 3D models are printed according to a Cartesian coordinate system on a build platform of a 3D printer. In order to make different parts of the 3D model can be printed according to corresponding slicing layer angles, the 3D model needs to be layered, and slicing layer angles and contour shapes of each layer are determined after segmentation.

In one embodiment, the 3D model can be layered according to normal vector or other information of patch of stereo lithography (STL) model. For example, the layering steps may includes: obtaining a maximum allowable layer thickness and a minimum allowable layer thickness according to a 3D printing device; processing a 3D model of a product to be printed by using a slicing software according to the obtained minimum allowable layer thickness, to obtain a space level conformal (SLC) file of the product to be printed.

In other embodiments, a solid model of computer aided design (CAD) format can be adaptively layered. By using an accurate 3D model to be adaptively layered, the solid model can also be accurately imaged.

In one embodiment, the method of obtaining contour data may include, but not limited to: directly layering and slicing a CAD model to obtain the contour data; or converting the CAD model into a surface model, and layering and slicing the surface model to obtain the contour data; or converting the CAD model into a STL model, and layering and slicing the STL model to obtain the contour data; or converting the CAD model into the surface model, converting the surface model into the STL model, and layering and slicing the surface model to obtain the contour data.

In block S2, for each of the sliced layers, a straight line X=X0 corresponding to an abscissa X0 of an intersection point of a preset seamline on the current layer of the sliced layers is determined.

In one embodiment, a straight line X=m+n*Z corresponding to the abscissa X0 of the intersection point of the preset seamline on the current layer is determined according to an equation of X0=m+n*Z, m and n are constants, and Z is a height of the current layer.

In one embodiment, the preset seamline is a known line, then a parameter equation of the preset seamline is determined, position information of intersection points of the preset seamline and the contour of the current layer are determined, and the abscissa of each intersection point also can be determined. It can be understood that the intersection points of the preset seamline and the contour of the current layer may be intersection points of the preset seamline and an original contour of the 3D model.

Correspondingly, when the preset seamline intersects with a plurality of sliced layers of the 3D model, the current layer or a height of the current layer where the intersection point is located can determine that the abscissa X0 of the intersection point may satisfy the equation of X0=m+n*Z, m and n are constants, and Z is the height of the current layer.

In one embodiment, when the preset seamline is a vertical seamline, n can be taken as 0. That is, the intersection points of the vertical seamline and the sliced layers all have the same abscissa, and the abscissa of the intersection point of the preset seamline on the current layer is determined as X0=m according to the equation of X0=m+n*Z.

Exemplarily, the preset seamline can be set to intersect with all sliced layers of the 3D model or intersect with part of sliced layers of the 3D model. When the preset seamline intersects with part of sliced layers of the 3D model, the part of sliced layers can be complete continuous, or part of continuous, or complete discontinuous.

In block S3, coordinates of a seam point are determined according to the straight line X=X0 corresponding to the abscissa of the intersection point of the preset seamline on the current layer and the contour data of the current layer, the coordinates of the seam point are updated into the contour data of the current layer, and the seam point is set as a start printing point of the current layer.

In one embodiment, obtaining an abscissa X0 of the seam point may includes the following manners.

In one embodiment, when the abscissa of the intersection point of the preset seamline on the current layer is the same as the abscissa of the seam point corresponding to the current layer, the abscissa of the seam point is determined as X0=m+n*Z, m and n are constants, and Z is the height of the current layer.

In one embodiment, when the preset seamline is the vertical seamline, and n=0, a straight line X0=m corresponding to the abscissa of the intersection point of the preset seamline on the current layer according to the equation of X0=m+n*Z, and the abscissa of the seam point of each layer is X0=m.

In one embodiment, obtaining an ordinate of the seam point may includes the following manners.

In one embodiment, distances from each point in the contour data of the current layer to a straight line X=m+n*Z are calculated.

Exemplarily, in a two-dimensional plane (a plane corresponding to the selected layer), the distances from all points in the contour data to the straight line X=m+n*Z are calculated by using a point-to-line calculation formula.

In one embodiment, two auxiliary location points Q1 and Q2 are selected according to distance calculated results (distances of all points in the contour data to the straight line X=m+n*Z) and the straight line X=m+n*Z, and a linear equation L=ax+b is established by simultaneous Q1 and Q2, a and b are constants.

Exemplarily, after calculating the distances of all points in the contour data of the current layer to the straight line X=m+n*Z, the distances corresponding to all points in the contour data of the current layer are compared, and two points with the smallest distance are selected as the auxiliary location points Q1 and Q2 by sorting the calculated distances. The two points with the smallest distance may be two points distributed on both sides of the straight line X=m+n*Z. That is, the abscissa of one of the auxiliary location points Q1 and Q2 is greater than X=m+n*Z, and the abscissa of the other is less than X=m+n*Z.

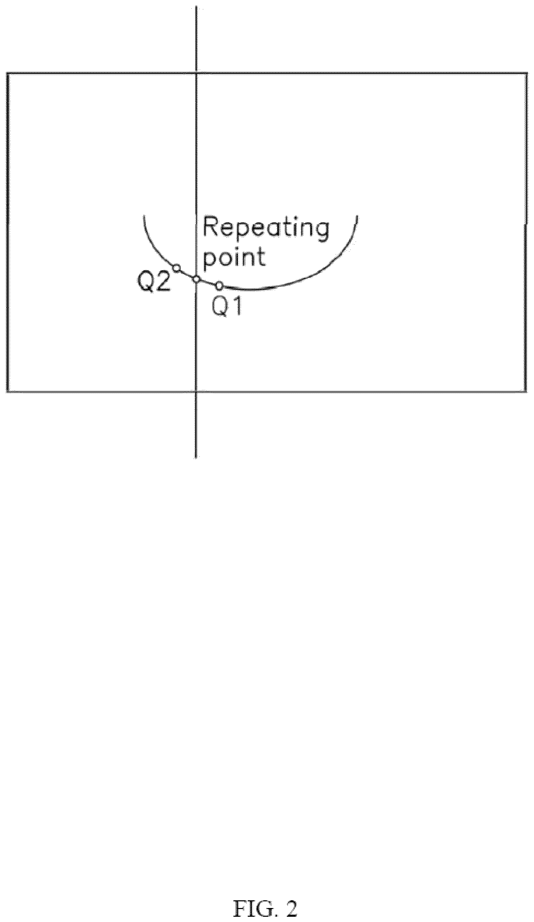

In one embodiment, referring to FIG. 2, when only one repeating point is existed between the current layer and the straight line X=m+n*Z, two points in the contour data of the current layer that are closest to the preset seamline are selected as the two auxiliary location points Q1 and Q2. In this embodiment, the repeating point is the intersection point.

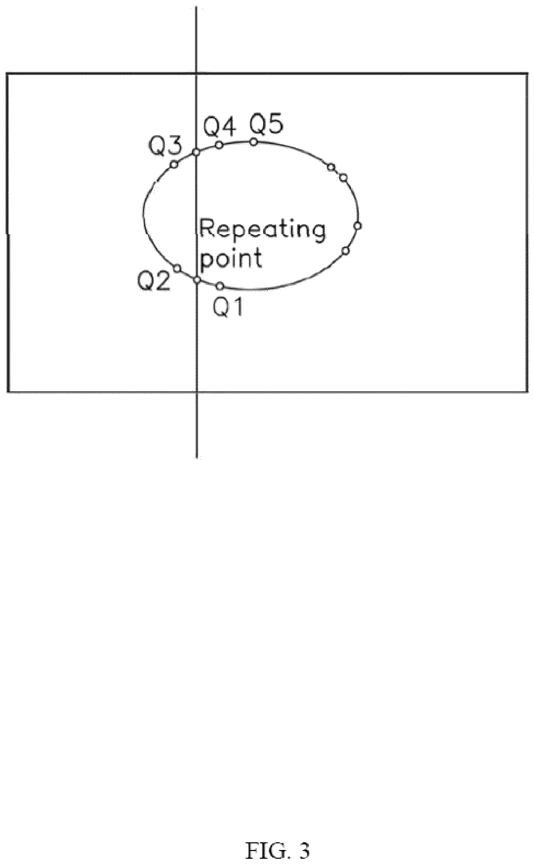

In one embodiment, referring to FIG. 3, when a plurality of repeating points is existed between the current layer and the straight line X=m+n*Z, that is, a plurality of points with the same distance from the straight line X=m+n*Z exists, two points closest to the preset seamline are selected as the two auxiliary location points Q1 and Q2. In this embodiment, only one of the plurality of repeating points is the intersection point, and the two auxiliary location points Q1 and Q2 are the two points closest to the said repeating point (the said repeating point is the intersection point).

In one embodiment, when intersecting the contour data of each layer to select the auxiliary location points, the two points that are closest to the preset seamline are selected as the auxiliary location points Q1 and Q2, so that the ordinate of the seam point of each layer can be very close.

Exemplarily, the seam point is located on a 3D model formed by splicing a plurality of small triangles, and the seam point may be a point closest to the intersection point of the original 3D model. When the 3D model is divided into sufficiently small triangles, the seam point can be approximately the same point as the intersection point.

For example, the auxiliary location points of the sliced layers may include two points closest to the straight line x=p (e.g., Q1 and Q3), and also may include two points (e.g., Q2 and Q4) that are second closest to x=p. Points Q1 and Q2 are located on a side of the straight line x=p, and points Q3 and Q4 are located on the other side of the straight line x=p. When the points Q1 and Q2 are determined to be closest to the preset seamline, the points Q1 and Q2 are selected as the auxiliary location points.

In one embodiment, the ordinate of the seam point is obtained by calculating an intersection of equations of X=m+n*Z and L=ax+b.

Exemplarily, combining the two equations of X=m+n*Z and L=ax+b, the intersection point of the straight line X=m+n*Z and L=ax+b can be determined by calculating the common solution of the two equations. The intersection point of the straight line X=m+n*Z and L=ax+b is the seam point that needs to be obtained, and complete coordinate information (abscissa and ordinate) of the seam point can be determined according to the intersection result, so that the seam point with coordinates has a printing basis.

In other embodiments, a nested loop block may be included after performing blocks S1 to S3. The nested loop step is used for supplementing the coordinate information of the seam point corresponding to each intersected layer in sequence when the preset seamline intersects with a plurality of layer. That is, each intersected layer is supplemented coordinates of corresponding seam point.

In one embodiment, when the 3D model is layered to a plurality of sliced layers, one or more sliced layers are intersected with the preset seamline. In general, sliced layers intersected with the preset seamline are continuous, then printed seamline is continuous. In some embodiments, the preset seamline is intersected with some sliced layers of the 3D model. In other words, the preset seam line appears in part of sliced layers of the 3D model (not all sliced layers), and position information (coordinates) of each seam point need to be respectively supplemented in the part of the sliced layers of the 3D model. In some embodiments, the preset seamline may be intersected with all sliced layers of the 3D model, and the position information of each seam point need to be respectively supplemented in all sliced layers of the 3D model.

Exemplarily, supplementation can start from an ith layer, the position information of the seam point in the ith layer can be determined according to the above blocks S2 and S3, and the position information of the seam point in the ith layer is supplemented into the contour data of the ith layer. Then, the position information of corresponding seam point is gradually supplemented into the contour data of corresponding layer until the last layer.

In one embodiment, when the contour data of the ith layer (i may be a natural number) is obtained and the position information of the seam point located on the ith layer is determined, the position information of the seam point located on the ith layer is supplemented into the contour data of the ith layer.

In one embodiment, the ith layer may be the first layer selected form the sliced layers to be supplemented.

In one embodiment, the contour data of the (i+p)th layer (p is a natural number greater than 0) can be continued to be obtained and the position information of the seam point located on the (i+p)th layer can be determined, the position information of the seam point located on the (i+p)th layer is supplemented into the contour data of the (i+p)th layer.

In one embodiment, the (i+p)th layer is a layer selected from other sliced layers to be supplemented after the ith layer is supplemented with the position information of the seam point.

In one embodiment, p=1, adjacent sliced layers may be selected sequentially, and the position information of each seam point is added into the contour data of the corresponding to each layer in a layer-by-layer manner. In other embodiments, m may be a natural number other than 0 or 1, that is, nonadjacent sliced layers can be selected to supplement the position information of corresponding seam points.

Exemplarily, the contour data of the (i+p+k)th layer (k is a natural number greater than 0) can be continued to be obtained and the position information of the seam point located on the (i+p+k)th layer can be determined, the position information of the seam point located on the (i+p+k)th layer is supplemented into the contour data of the (i+p+k)th layer; and so on until the seam points of all sliced layers that intersect with the preset seamline are determined and supplemented.

In one embodiment, the method may further include: generating filling data and supporting data of the 3D model. For example, a shell model of a "*.stl" format is imported into a Magic software, the shell model is oriented and placed in a suitable position of a substrate model in the Magic software; a support structure is built on the shell model in the Magic software. The support structure can be a network support structure. The 3D model and the support structure are layered and sliced to output a slicing file of a "*.cli" format, the slicing file of the "*.cli" format is imported into a TSC Building filling software. Laser scanning paths are planed in the TSC Building filling software to fill each slicing layer, to output a filling file of a "*.cli" format, and the filling file of the "*.cli" format can be imported into the 3D printer.

In one embodiment, the method may further include generate a generic code (Gcode) file by a slicing engine, the Gcode file is configured for the 3D printer to read and print.

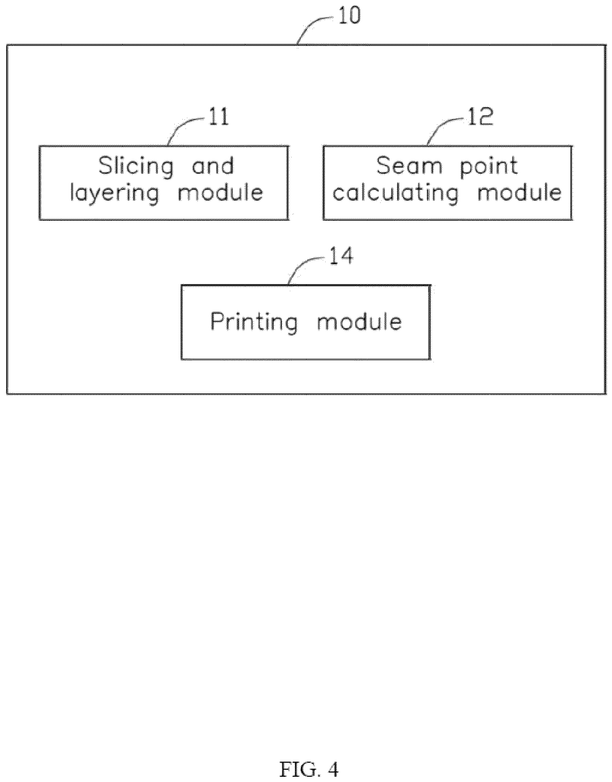

FIG. 4 is a schematic structural diagram of a 3D printing device according to an embodiment of the present application. The 3D printing device can be realized by means of hardware and/or software, and can generally be integrated into a computer device.

The 3D printing device 10 may include a model obtaining module 210, a slicing and layering module 11, a seam point calculating module 12, and a printing module 14.

The slicing and layering module 11 is configured to layer a 3D model into a plurality of sliced layers, and obtain contour data of each of the sliced layers.

The seam point calculating module 12 is configured to determine a straight line X=X0 corresponding to an abscissa X0 of an intersection point of a preset seamline on the current layer of the sliced layers, determine coordinates of a seam point according to the straight line corresponding to the abscissa of the intersection point of the preset seamline X=X0 on the current layer and the contour data of the current layer, update the coordinates of the seam point into the contour data of the current layer, and set the seam point as a start printing point of the current layer.

The printing module 14 is configured to print the 3D model according to updated contour data of each of the sliced layers.

The 3D printing device 10 provided in the embodiments of the present application can execute a method for generating a 3D printing file provided in any embodiment of the present application, and have corresponding functional for executing the method and beneficial effects of the method.

In the embodiment of the 3D printing apparatus 10, units and modules are divided according to functional logics, but are not limited to the above-mentioned division, the premise of the division is that the corresponding function can be achieved. The names of the functional units/modules are also for distinguishing themselves and are not intended to limit the scope of protection of the present application.

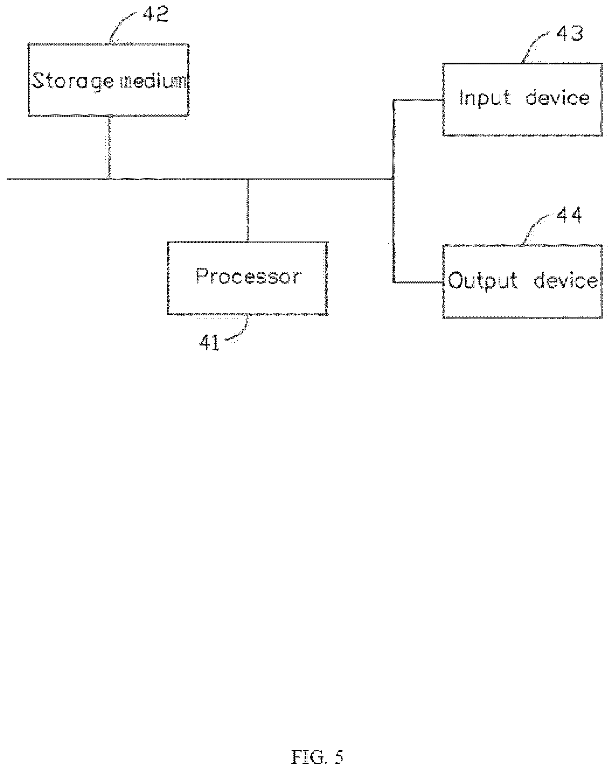

Referring to FIG. 5, FIG. 5 is a schematic structural diagram of a computer device according to an embodiment of the present application. The computer device shown in FIG. 5 is an example and should not impose any limitation on the functionality and scope of the embodiments of the present application.

As shown in FIG. 5, the computer device may include a processor 41, a storage medium 42, an input device 43, and an output device 44; the computer device may include one or more processors 41, FIG. 5 only shows one processor 41 as an example; the processor 41, the storage medium 42, the input device 43, and the output device 44 of the computer device can be connected by buses or other manners, and FIG. 5 shows communication buses as an example.

The storage medium 42 is a kind of computer-readable storage medium, which can be used to store software programs, computer-executable programs, and modules, such as program instructions/modules corresponding to the method for generating the 3D printing file in the embodiments of the present application (for example, the slicing and layering module 11, the seam point calculating module 12, and the printing module 14 of the 3D printing device). The processor 41 can run the software program, instruction, and module stored in the storage medium 42 to execute functional applications and data processing in the device, i.e., to execute the above-mentioned method for generating the 3D printing file.

The storage medium 42 may include a storage program area and a storage data area. The storage program area can store an operating system, at least one application required for a function. The storage data area can store data created in a use of the device. In addition, the storage medium 42 may include high-speed random access memory, non-volatile memory, such as at least one disk storage medium, flash memory device, or other non-volatile solid-state memory device. In some embodiments, the storage medium 42 may further include memory that is set remotely relative to the processor 41, which can be accessed to the device via a network. The network may include, but not limited to, the Internet, intranet, local area network, mobile communication network, and combinations thereof.

The input device 43 can be configured to obtain the 3D model to be printed and generate key input signals related to user setting and function control of the computer device. The output device 44 can be configured to generate the print file used by the 3D printer.

The present application further provides a computer storage medium, the computer storage medium stores computer instructions, when the computer instructions run on a processor, the processor is caused to execute the method for generating the 3D printing file. The method includes: layering a 3D model into a plurality of sliced layers, and obtaining contour data of each of the sliced layers; determining a straight line X=X0 corresponding to an abscissa X0 of an intersection point of a preset seamline on the current layer of the sliced layers; determining coordinates of a seam point according to the straight line X=X0 corresponding to the abscissa X0 of the intersection point of the preset seamline on the current layer and the contour data of the current layer, updating the coordinates of the seam point into the contour data of the current layer, and setting the seam point as a start printing point of the current layer; and generating a 3D printing file of the 3D model according to updated contour data of each of the sliced layers.

Storage medium can be any type of storage mediums. The term "storage medium " is intended to include mounting media such as CD-ROMs, floppy disks or tape devices, computer system memory or random access memory such as DRAM, DDR RAM, SRAM, EDO RAM, Rambus RAM, etc., non-volatile memory such as flash memory, magnetic media (such as hard disks or optical storage), registers or other similar types of memory components, etc. Storage medium may also include other types of storage or a combination thereof. In addition, the storage medium may be located in a computer system in which the program is executed, or it may be located in a different second computer system that is connected to the computer system via a network (such as the Internet). Secondly, a computer system can provide program instructions to a computer for execution. The term "storage medium" can include two or more storage mediums that reside in different locations, such as in different computer systems connected over a network. A storage medium can store program instructions that can be executed by one or more processors (e.g., as a computer program)

Exemplarily, the embodiment of the present application provides the computer storage medium storing computer instructions, and the computer instructions is not limited to execute the method described in the previous paragraph. When the computer programs run on the processor, the processor is further caused to execute the method for generating the 3D printing file provided in any embodiment of the present application.

A computer-readable signal medium may include a data signal that is propagated in a baseband or as part of a carrier wave, which carries computer-readable program code. This propagating data signal can take many forms, including, but not limited to, electromagnetic signals, optical signals, or any suitable combination of the above. A computer-readable signal medium may also be any computer-readable medium other than a computer-readable storage medium, which may send, disseminate, or transmit programs intended for use by or in combination with instruction-executing systems, or devices.

Program code included in the computer-readable medium may be transmitted by any appropriate medium, including, but not limited to, wireless, wire, optical cable, RF, etc., or any appropriate combination thereof.

From the above description of embodiments, it is clear to the skilled in the art that the present application can be realized with a help of software and necessary general hardware, and it can also be implemented by hardware, but in many cases the former is the exemplary embodiment. Based on this understanding, the part of the solution of the present application that contributes to the prior art may be shown in a form of a software product, which can be stored in a computer-readable storage medium, such as a computer floppy disk, read-only memory (ROM), random access memory (RAM), flash memory, a hard disk or a compact disc, etc., including instructions for enabling a computer device (which may be a personal computer, a server, or a network device, etc.) to perform the method described in any embodiment of the present application.

The embodiments of the present application is described in conjunction with the drawings. A person of ordinary skill in the art can understand that various changes and substitutions may be made to the embodiments of the present application without deviating from the spirit and scope of the present application. These changes and replacements fall within the limits of the present application.

## Claims

1. A method for generating a three-dimensional (3D) printing file, **characterized in that**, the method comprises:
layering a 3D model into a plurality of sliced layers, and obtaining contour data of each of the sliced layers;
determining a straight line X=X0 corresponding to an abscissa X0 of an intersection point of a preset seamline on the current layer of the sliced layers;
determining coordinates of a seam point according to the straight line X=X0 corresponding to the abscissa X0 of the intersection point of the preset seamline on the current layer and the contour data of the current layer, updating the coordinates of the seam point into the contour data of the current layer, and setting the seam point as a start printing point of the current layer; and
generating a 3D printing file of the 3D model according to updated contour data of each of the sliced layers.

2. The method of claim 1, **characterized in that**, determining the straight line X=X0 corresponding to the abscissa X0 of the intersection point of the preset seamline on the current layer of the sliced layers comprises:
determining a straight line X= m+n*Z corresponding to the abscissa X0 of the intersection point of the preset seamline on the current layer according to an equation of X0=m+n*Z, m and n are constants, and Z is a height of the current layer.

3. The method of claim 2, **characterized in that**, determining the coordinates of the seam point according to the straight line X=X0 corresponding to the abscissa X0 of the intersection point of the preset seamline on the current layer and the contour data of the current layer comprises:
determining an abscissa of the seam point as X0=m+n*Z when the abscissa of the intersection point of the preset seamline on the current layer is the same as the abscissa of the seam point corresponding to the current layer, m and n are constants, and Z is the height of the current layer.

4. The method of claim 3, **characterized in that**, the preset seamline is a vertical seamline, and n=0, the abscissa of the intersection point of the preset seamline on the current layer is determined as X0=m according to the equation of X0=m+n*Z.

5. The method of claim 3, **characterized in that**, determining the coordinates of the seam point according to the straight line X=X0 corresponding to the abscissa X0 of the intersection point of the preset seamline on the current layer and the contour data of the current layer further comprises:
calculating distances from each point in the contour data of the current layer to a straight line X=m+n*Z;
selecting two auxiliary location points Q1 and Q2 according to distance calculated results and the straight line X=m+n*Z, and establishing a linear equation L=ax+b by simultaneous Q1 and Q2, a and b are constants;
calculating an intersection of equations of X=m+n*Z and L=ax+b to obtain an ordinate Y0 of the seam point; and
determining the coordinates (X0, Y0) of the seam point according to the abscissa X0 of the seam point and the ordinate Y0 of the seam point.

6. The method of claim 5, **characterized in that**, selecting the two auxiliary location points Q1 and Q2 according to the distance calculated results and the straight line X=m+n*Z comprises:
selecting two points closest to the preset seamline as the two auxiliary location points Q1 and Q2 when a plurality of repeating points is existed between the current layer and the straight line X=m+n*Z.

7. The method of claim 5, wherein selecting the two auxiliary location points Q1 and Q2 according to the distance calculated results and the straight line X=m+n*Z comprises:
selecting two points in the contour data of the current layer that are closest to the preset seamline as the two auxiliary location points Q1 and Q2 when one repeating point is existed between the current layer and the straight line X=m+n*Z.

8. A three-dimensional (3D) printing device, **characterized in that**, the 3D printing device comprises:
a slicing and layering module, configured to layer a 3D model into a plurality of sliced layers, and obtain contour data of each of the sliced layers;
a seam point calculating module, configured to determine a straight line corresponding to an abscissa of an intersection point of a preset seamline on the current layer of the sliced layers, determine coordinates of a seam point according to the straight line corresponding to the abscissa of the intersection point of the preset seamline on the current layer and the contour data of the current layer, update the coordinates of the seam point into the contour data of the current layer, and set the seam point as a start printing point of the current layer; and
a printing module, configured to print the 3D model according to updated contour data of each of the sliced layers.

9. A computer device, comprising:
one or more processors; and
a storage medium, configured to store one or more programs, **characterized in that**, when the one or more programs run on the one or more processors, to cause the one or more processors to execute a method for generating a three-dimensional (3D) printing file according to any one of claims 1 to 7.

10. A computer storage medium, **characterized in that**, the computer storage medium stores computer programs, when the computer programs run on a processor, the processor is caused to execute a method for generating a three-dimensional (3D) printing file according to any one of claims 1 to 7.
